# EUROPÄISCHE PATENTSCHRIFT

(11) **EP 3 619 638 B1**
(45) Veröffentlichungstag und Bekanntmachung des Hinweises auf die Patenterteilung: **04.05.2022**
(21) Anmeldenummer: 18722439.9
(22) Anmeldetag: 26.04.2018
(51) Int. Cl.: G06F 21/62, G06F 21/60

(54) **VERFAHREN ZUM GESICHERTEN ZUGRIFF AUF DATEN**
METHOD FOR SECURING ACCESS TO DATA
PROCÉDÉ DE SÉCURISATION DE L'ACCÈS AUX DONNÉES

(30) Priorität: 03.05.2017 DE 102017109424
(43) Veröffentlichungstag der Anmeldung: 11.03.2020
(73) Patentinhaber: Uniscon universal identity control GmbH, 80992 München (DE)
(72) Erfinder: JÄGER, Hubert, 82049 Pullach (DE); QUINTERO, Juan, 90443 Nürnberg (DE)
(74) Vertreter: 2s-ip Schramm Schneider Bertagnoll Patent- und Rechtsanwälte Part mbB
(86) Internationale Anmeldenummer: PCT/EP2018/060780
(87) Internationale Veröffentlichungsnummer: WO 2018/202550

(56) Entgegenhaltungen:
- EP-A1- 3 586 261
- DE-T5-112014 005 855
- US-A1- 2013 111 217

## Beschreibung

### Gebiet der Erfindung

Die Erfindung betrifft ein Verfahren und ein System zum gesicherten Zugriff auf Daten. Insbesondere betrifft die Erfindung ein Verfahren und ein System zum weiteren gesicherten Zugriff auf Daten, nachdem sich die Zugriffsrichtlinien für den Zugriff auf diese Daten geändert haben.

### Hintergrund der Erfindung

In Unternehmen werden immer mehr Daten von Kunden (oder anderen natürlichen oder juristischen Personen) gespeichert. Im Stand der Technik bekannt ist es hierbei, diese Kundendaten zu verschlüsseln. Allerdings werden solche Kundendaten zunehmend nicht mehr nur von dem die Daten erhebenden Unternehmen selbst ausgewertet, etwa im Rahmen einer Big Data Analyse, sondern auch von Dritten.

Um eine datenschutzkonforme Auswertung zu ermöglichen, ist es bekannt die Daten zu anonymisieren. Solche Auswertungen, sei es durch das die Daten erhebende Unternehmen, sei es durch Dritte, können bzw. sollten allerdings nur mit Zustimmung des Kunden möglich sein. Der Kunde kann hierbei dem die Daten erhebenden Unternehmen die explizite Zustimmung für eine bestimmte Art von Auswertung erteilen. Bekannt ist es hierbei, dass die Daten nur mit einem Entschlüsselungsschlüssel des jeweiligen Kunden entschlüsselt werden können, um sie anschließend auszuwerten. Diese Entschlüsselungsschlüssel müssen allerdings dem die Daten erhebenden Unternehmen zur Verfügung stellen, damit eine praktikable Auswertung überhaupt möglich ist. Eine Entschlüsselung der Daten durch den Kunden zum Zeitpunkt der Auswertung ist aus rein logistischen Gründen nicht möglich.

Nachteilig hierbei ist allerdings, dass das Unternehmen die Daten trotz der expliziten Zustimmung des Kunden für lediglich eine bestimmte Art von Auswertung auch für andere Zwecke auswerten kann, da das Unternehmen ja im Besitz der Entschlüsselungsschlüssel ist. Damit könnten Daten auch ohne Einverständnis des Kunden auf eine andere Art ausgewertet werden.

### Aufgabe der Erfindung

Aufgabe der vorliegenden Erfindung ist es daher, die aus dem Stand der Technik bekannten Nachteile zu vermeiden, insbesondere Lösungen bereitzustellen, die es ermöglichen, dass auch Auswertungen für andere Zwecke nur unter der Kontrolle des Kunden bzw. der Eigentümer der Daten möglich ist.

### Erfindungsgemäße Lösung

Erfindungsgemäß wird diese Aufgabe mit einem Verfahren und einem System nach den unabhängigen Ansprüchen gelöst. Vorteilhafte Ausgestaltungen und Weiterbildungen der Erfindung sind in den jeweiligen abhängigen Ansprüchen angegeben. Dabei gelten Merkmale und Details, die im Zusammenhang mit dem erfindungsgemäßen Verfahren beschrieben sind, auch im Zusammenhang mit dem erfindungsgemäßen System und umgekehrt, sodass bezüglich der Offenbarung zu den einzelnen Erfindungsaspekten stets wechselseitig Bezug genommen werden kann.

Bereitgestellt wird demnach ein Verfahren zum gesicherten Zugriff auf Daten, wobei
- die Daten eine Anzahl von Datensätzen umfassen, wobei
- die Datensätze jeweils einer Instanz, vorzugweise einem Benutzer zugeordnet werden, und
- die Datensätze verschlüsselt in einer Datenbank gespeichert werden, wobei zum Entschlüsseln der der jeweiligen Instanz zugeordneten Datensätze ein der jeweiligen Instanz zugeordneter erster Entschlüsselungsschlüssel verwendet wird,
- die ersten Entschlüsselungsschlüssel ausschließlich in einem volatilen Speicher gespeichert werden,
- die der jeweiligen Instanz zugeordneten ersten Entschlüsselungsschlüssel jeweils separat mit einem ersten und mit zumindest einem zweiten der jeweiligen Instanz zugeordneten Verschlüsselungsschlüssel verschlüsselt werden und die sich daraus ergebenden zumindest zwei verschlüsselten ersten Entschlüsselungsschlüssel in einem permanenten Speicher gespeichert werden,
- der Zugriff auf die in der Datenbank (DB) verschlüsselten Datensätze über eine Zugriffskontrolleinrichtung (PGU) abgewickelt wird, wobei in der Zugriffskontrolleinrichtung (PGU) Zugriffsrichtlinien hinterlegt sind, die angeben, wer zu welchem Zweck auf die verschlüsselten Datensätze zugreifen kann,
- der jeweiligen Instanz (U) eine Anzahl an Zugriffsrichtlinien zugeordnet ist,
- jeder der zumindest zwei verschlüsselten ersten Entschlüsselungsschlüssel (VKK) einer anderen Zugriffsrichtlinie zugeordnet ist,
- bei einer Änderung der Zugriffsrichtlinien der gesamte Inhalt des volatilen Speichers (VMEM) gelöscht wird, und
- nach einem Löschen des volatilen Speichers
   - die verschlüsselten ersten Entschlüsselungsschlüssel von dem permanenten Speicher in den volatilen Speicher kopiert werden, und
   - in dem volatilen Speicher die verschlüsselten ersten Entschlüsselungsschlüssel mit einem ersten und mit zumindest einem zweiten der jeweiligen Instanz zugeordneten zweiten Entschlüsselungsschlüssel entschlüsselt werden, sodass der der jeweiligen Instanz (U) zugeordnete erste Entschlüsselungsschlüssel (VK) in dem volatilen Speicher (VMEM) wieder in entschlüsselter Form vorliegt, und für das Entschlüsseln der der jeweiligen Instanz (U) zugeordneten und in der Datenbank (DB) gespeicherten Daten verwendet werden kann.

Der einer Instanz zugeordnete erste Entschlüsselungsschlüssel wird also mit dem ersten und mit dem zumindest einen zweiten Verschlüsselungsschlüssel mehrfach verschlüsselt. "Separat verschlüsselt" bzw. "mehrfach verschlüsselt" bedeutet hierbei, dass der erste Entschlüsselungsschlüssel einmal mit dem ersten Verschlüsselungsschlüssel verschlüsselt wird und separat hiervon einmal mit einem zweiten Verschlüsselungsschlüssel verschlüsselt wird, sodass sich daraus zwei verschiedene und voneinander unabhängige verschlüsselte erste Entschlüsselungsschlüssel ergeben. Nicht gemeint ist also, dass der erste Entschlüsselungsschlüssel mit dem ersten Verschlüsselungsschlüssel verschlüsselt wird und der sich daraus ergebende verschlüsselte erste Entschlüsselungsschlüssel mit einem zweiten Verschlüsselungsschlüssel erneut verschlüsselt wird.

Für jeden Zweck einer Datenauswertung kann so ein separater verschlüsselter erster Entschlüsselungsschlüssel erzeugt werden, die dann in dem permanenten Speicher gespeichert werden.

Damit können in vorteilhafter Weise die unverschlüsselten ersten Entschlüsselungsschlüssel, die zum Entschlüsseln der Daten vorgesehen sind, etwa bei einer Änderung des Zweckes der Datenauswertung gelöscht bzw. vernichtet werden. Gleichzeitig ist aber durch das mehrfache Verschlüsseln der ersten Entschlüsselungsschlüssel (daraus ergeben sich für jede Instanz mehrere verschlüsselte erste Entschlüsselungsschlüssel) und durch das Speichern der mehreren verschlüsselten ersten Entschlüsselungsschlüssel gewährleistet, dass die ersten Entschlüsselungsschlüssel nach einer Zustimmung des jeweiligen Eigentümers der Daten wieder hergestellt werden können. Weil für jede Art von Auswertung ein separater verschlüsselter erster Entschlüsselungsschlüssel erzeugt wird, kann der Eigentümer der Daten für jede Art von Auswertung getrennt entscheiden kann, ob der erste Entschlüsselungsschlüssel wieder hergestellt werden soll. Für eine Big Data Analyse von besonderem Vorteil ist hierbei, dass nicht nur zukünftig erhobene Daten für verschiedene Zwecke ausgewertet werden können, sondern auch die bereits vor der Änderung des Zweckes der Datenauswertung erhobenen Daten.

Vorteilhaft ist es hierbei, wenn die der jeweiligen Instanz zugeordneten Verschlüsselungsschlüssel zum Verschlüsseln der ersten Entschlüsselungsschlüssel und die der jeweiligen Instanz zugeordneten zweiten Entschlüsselungsschlüssel zum Entschlüsseln der verschlüsselten ersten Entschlüsselungsschlüssel jeweils mit einem Geheimnis erzeugt werden, das von der jeweiligen Instanz bereitgestellt wird, wobei das Geheimnis von der jeweiligen Instanz separat für das Erzeugen der Verschlüsselungsschlüssel und für das Erzeugen der zweiten Entschlüsselungsschlüssel bereitgestellt wird. Das heißt, dass das Geheimnis einmal für das Erzeugen der Verschlüsselungsschlüssel und getrennt hiervon einmal für das Erzeugen der zweiten Entschlüsselungsschlüssel bereitgestellt wird.

Vorteilhaft ist es hierbei, wenn von der jeweiligen Instanz für jeden Verschlüsselungsschlüssel und für jeden zweiten Entschlüsselungsschlüssel ein verschiedenes, d.h. anderes Geheimnis bereitgestellt wird. Damit wird gewährleistet, dass mit einem zweiten Entschlüsselungsschlüssel ein erster Entschlüsselungsschlüssel für einen anderen Zweck wieder hergestellt werden kann.

Durch das Bereitstellen der Geheimnisse für das Erzeugen der zweiten Entschlüsselungsschlüssel kann die jeweilige Instanz, etwa ein Kunde, sein Einverständnis für das Entschlüsseln der Daten und für die Auswertung der Daten gemäß einem oder mehrerer Zwecke geben.

Es hat sich als vorteilhaft herausgestellt, wenn die Geheimnisse jeweils nach dem Erzeugen der mehreren Verschlüsselungsschlüssel und nach dem Erzeugen der mehreren zweiten Entschlüsselungsschlüssel verworfen bzw. gelöscht werden. Damit ist sichergestellt, dass die verschlüsselten ersten Entschlüsselungsschlüssel nicht ohne Einverständnis der jeweiligen Instanz wieder hergestellt werden können. Die Verschlüsselungsschlüssel können nach dem Verschlüsseln der ersten Entschlüsselungsschlüssel gelöscht oder ausschließlich in dem volatilen Speicher gespeichert werden.

Die zweiten Entschlüsselungsschlüssel können nach dem Entschlüsseln der verschlüsselten ersten Entschlüsselungsschlüssel gelöscht oder ausschließlich in dem volatilen Speicher gespeichert werden.

Im erfindungsgemäßen Verfahren wird der Zugriff auf die in der Datenbank verschlüsselten Datensätze über eine Zugriffskontrolleinrichtung abgewickelt, wobei in der Zugriffskontrolleinrichtung Zugriffsrichtlinien hinterlegt sind, die angeben, wer zu welchem Zweck auf die verschlüsselten Datensätze zugreifen kann.

Bei einer Änderung der Zugriffsrichtlinien wird der gesamte Inhalt des volatilen Speichers gelöscht.

Dadurch ist gewährleistet, dass auf die in der Datenbank verschlüsselt gespeicherten Datensätze nach Änderung der Zugriffsrichtlinien nicht ohne Einwilligung der jeweiligen Instanz zugegriffen werden kann. Denn ein Zugriff ist erst nach dem Wiederherstellen der ersten Entschlüsselungsschlüssel möglich, was das Einverständnis der jeweiligen Instanz voraussetzt. Dieses Einverständnis gibt die jeweilige Instanz durch das Bereitstellen der Geheimnisse, nachdem der volatile Speicher gelöscht wurde. Für welchen konkreten Zweck die ersten Entschlüsselungsschlüssel wieder hergestellt werden, hängt hierbei davon ab, welche der Geheimnisse die jeweilige Instanz bereitstellt. Beispielsweise können mit einem Geheimnis S1 der erste Entschlüsselungsschlüssel für den Zweck Z1 und mit einem Geheimnis S2 der erste Entschlüsselungsschlüssel für den Zweck Z2 wieder hergestellt werden. Ein Wiederherstellen des ersten Entschlüsselungsschlüssels für den Zweck Z2 mit dem Geheimnis S1 ist hierbei nicht möglich.

Werden die Verschlüsselungsschlüssel und/oder die zweiten Entschlüsselungsschlüssel ausschließlich im volatilen Speicher gespeichert, ist damit auch sichergestellt, dass diese etwa bei einer Änderung des Zweckes der Datenauswertung zusammen mit den ersten Entschlüsselungsschlüssel gelöscht bzw. vernichtet werden. Besonders vorteilhaft ist es, wenn die Zugriffskontrolleinrichtung physikalisch mit dem volatilen Speicher gekoppelt (d.h. fest verdrahtet) ist, wobei bei einer Änderung der Zugriffsrichtlinien die Zugriffskontrolleinrichtung neu gestartet wird und aufgrund der physikalischen Kopplung auch der volatile Speicher neu gestartet wird. Das Neustarten der Zugriffskontrolleinrichtung bewirkt also, dass auch der volatile Speicher neu gestartet wird. Beim Neustarten des volatilen Speichers wird der gesamte Inhalt des volatilen Speichers gelöscht, d.h. alle in dem volatilen Speicher gespeicherten Schlüssel (und sonstigen Daten) werden gelöscht bzw. vernichtet. Zudem werden beim Neustarten des volatilen Speichers auch alle gegebenenfalls vorhandenen Sicherungskopien des volatilen Speichers gelöscht. Vorteilhafter Weise ist es vorgesehen, dass beim Neustart des volatilen Speichers keine Sicherungskopien (z.B. Dumps) des volatilen Speichers erzeugt werden.

Vorteilhaft ist es, wenn die Datenbank, der volatile Speicher, der permanente Speicher und die Zugriffskontrolleinrichtung Teil einer gesicherten Umgebung sind. Die gesicherte Umgebung gewährleistet, dass weder der Betreiber der Infrastruktur noch ein sonstiger Dritter auf die Daten zugreifen kann. Der Zugriff auf die Daten ist nur über spezielle Schnittstellen möglich. Vorteilhaft ist hierbei, wenn auch die Auswertung der Daten (Big Data Analyse) in der gesicherten Umgebung durchgeführt wird und lediglich die Ergebnisse der Auswertung nach außen gegeben werden bzw. die gesicherte Umgebung verlassen.

Ferner ist es vorteilhaft, wenn beim Verschlüsseln des ersten Entschlüsselungsschlüssels ein verschlüsselter Block bzw. Datenblock erzeugt wird, wobei der verschlüsselte Block
- den ersten Entschlüsselungsschlüssel und
- Metadaten des ersten Entschlüsselungsschlüssels
   umfasst, wobei die Metadaten des ersten Entschlüsselungsschlüssels
- eine Information über eine Zuordnung des ersten Entschlüsselungsschlüssels zu einer Instanz (d.h. zu der jeweiligen Instanz), und/oder
- ein Information über eine Zuordnung einer Anzahl von Zugriffsrichtlinien zu einer Instanz
   umfassen.

Der Block bzw. Datenblock kann mit einem der jeweiligen Instanz zugeordneten Verschlüsselungsschlüssel verschlüsselt werden, wobei für jede Zugriffsrichtlinie ein separater verschlüsselter Block erzeugt wird. Vorteilhaft ist es hierbei, dass alle Informationen für ein Entschlüsseln der verschlüsselten Daten gemäß einer Zugriffsrichtlinie in einem einzigen Block vollständig enthalten sind.

Bereit gestellt wird durch die Erfindung ferner ein System, das angepasst ist, dass erfindungsgemäße Verfahren auszuführen.

### Kurzbeschreibung der Figuren

Einzelheiten und Merkmale der Erfindung sowie konkrete Ausführungsbeispiele der Erfindung ergeben sich aus der nachfolgenden Beschreibung in Verbindung mit der Zeichnung, wobei die Erfindung nicht auf die nachfolgend beschriebenen Ausführungsbeispiele beschränkt ist. Es zeigt:
- Fig. 1: ein Beispiel eines erfindungsgemäßen Systems zum gesicherten Zugriff auf Daten;
- Fig. 2: ein Ablaufdiagramm für ein erfindungsgemäßes Verfahren zum gesicherten Zugriff auf Daten;
- Fig. 3: ein Ablaufdiagramm für eine alternative Ausgestaltung eines erfindungsgemäßes Verfahren zum gesicherten Zugriff auf Daten; und
- Fig. 4: einen zeitlichen Ablauf für ein konkretes Beispiel des erfindungsgemäßen Verfahrens.

### Detaillierte Beschreibung der Erfindung

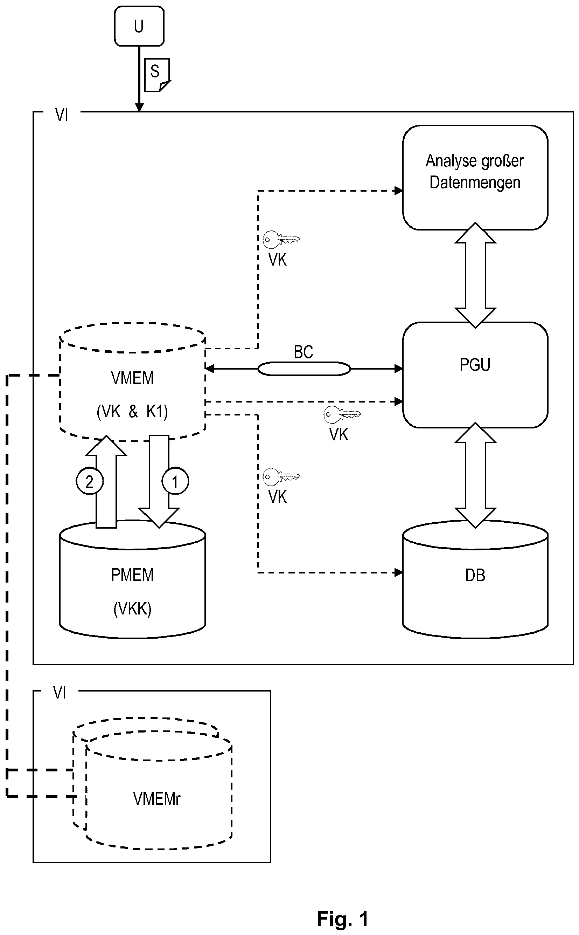

Fig. 1 zeigt ein Beispiel eines erfindungsgemäßen Systems bzw. einer erfindungsgemäßen Architektur.

In einer Datenbank DB sind Daten einer Instanz U gespeichert. Die Instanz U kann beispielsweise ein Kunde eines Unternehmens, ein Benutzer eines Systems oder eine sonstige natürliche oder juristische Person sein. Die Instanz U stellt Daten bereit, die in der Datenbank DB gespeichert werden. Die Daten der Instanz U können auf verschiedene Art und Weise erhoben werden. Beispielsweise können die Daten von einem der Instanz U zugeordneten Endgerät übermittelt werden. Das Endgerät kann etwa ein Mobiltelefon oder aber auch ein Fahrzeug sein. Im Falle eines Fahrzeuges, können Fahrzeugdaten erfasst und in der Datenbank gespeichert werden. Die Fahrzeugdaten können hierbei Fahrtrouten, Fahrstil (passiv/aggressiv), Fahrtzeiten, etc. aber auch Fahrbahnschäden, Beschilderungen, Hindernisse etc. umfassen. So können beispielsweise von einem Sensor erfasste Beschilderungen mit in Kartendaten hinterlegte Beschilderungen abgeglichen werden, um etwa fehlerhafte Kartendaten zu korrigieren. Diese und weitere Fahrzeugdaten können genutzt werden, um eine langfristige Erforschung von Mobilitätsdaten zu ermöglichen.

Der Zugriff auf die in der Datenbank DB gespeicherten nutzerbezogenen Daten soll erfindungsgemäß nur dann möglich sein, wenn der jeweilige Nutzer der entsprechenden Verwendung der Daten zugestimmt hat.

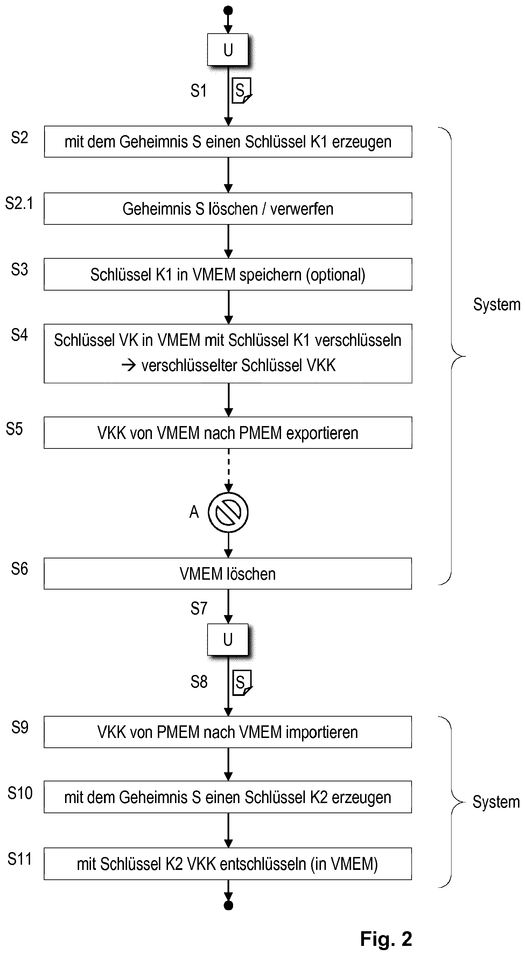

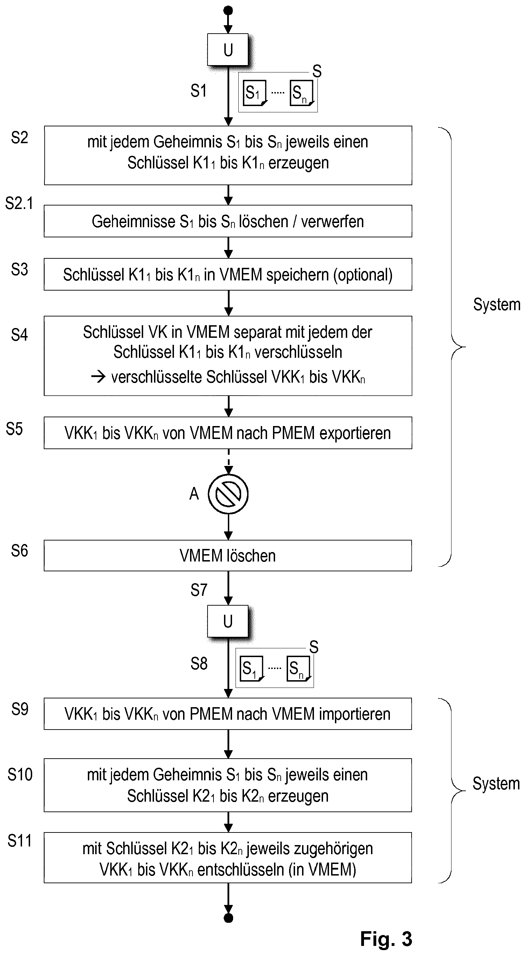

In dem nachfolgenden Beispiel und bei dem Verfahren gemäß Fig. 2 wird von einer ersten Verwendung und von einer zweiten Verwendung der Daten ausgegangen, wobei die zweite Verwendung der Daten verschieden von der ersten Verwendung der Daten ist. Die erste Verwendung kann etwa eine bestimmte erste Auswertung der Daten und die zweite Verwendung kann eine bestimmte zweite Auswertung derselben Daten sein. Generell ist die Erfindung aber nicht auf zwei Verwendungen beschränkt, sondern kann analog auch auf n Verwendungen übertragen werden, wobei, wie im Beispiel gemäß Fig. 3 gezeigt, der Benutzer jeder der n Verwendungen separat zustimmen kann.

Die Daten werden verschlüsselt in der Datenbank DB gespeichert. Sobald von einer Instanz U erstmalig Daten erfasst werden, muss die Instanz der ersten Verwendung zustimmen. Die Zustimmung der Instanz U kann in einer Ausgestaltung der Erfindung vor dem erstmaligen Erfassen der Daten erfolgen. Die Zustimmung zur ersten Verwendung impliziert, dass für das Entschlüsseln der in der Datenbank gespeicherten Daten entsprechende erste Entschlüsselungsschlüssel VK erzeugt werden.

Diese ersten Entschlüsselungsschlüssel VK werden erfindungsgemäß in einem volatilen Speicher VMEM gespeichert. Vorzugsweise sind jeder Instanz U andere erste Entschlüsselungsschlüssel VK zugeordnet.

Für den Zugriff auf die in der Datenbank DB gespeicherten Daten, werden die entsprechenden ersten Entschlüsselungsschlüssel VK aus dem volatilen Speicher VMEM ausgelesen und der auf die Datenbank zugreifenden Einheit übergeben. Diese zugreifende Einheit kann bei dem in Fig. 1 gezeigten System die Einheit sein, die die Auswertung durchführt (Big Data Analysis), oder die Zugriffskontrolleinrichtung PGU, die den Zugriff auf die Daten in der Datenbank DB überwacht. Alternativ kann der erste Entschlüsselungsschlüssel VK auch der Datenbank DB zur Verfügung gestellt werden, die dann intern beim Zugriff auf die Daten diese entschlüsselt.

Gleichzeitig (oder zeitnah) mit dem Erzeugen der ersten Entschlüsselungsschlüssel VK werden diese verschlüsselt. Zum Verschlüsseln der ersten Entschlüsselungsschlüssel VK wird ein Verschlüsselungsschlüssel K1 benötigt. Die Verschlüsselungsschlüssel K1, die jeweils einer Instanz zugeordnet sind, werden basierend auf einem Geheimnis S erzeugt. Jede Instanz U stellt hierbei dem System ein entsprechendes Geheimnis S zur Verfügung. Das Geheimnis S kann ein Passwort, Passphrase, ein Token oder eine sonstige geheime und nur der Instanz U bekannte Information sein. Bei der mit Bezug auf Fig. 3 gezeigten Ausgestaltung des erfindungsgemäßen Verfahrens kann jede Instanz U dem System mehrere Geheimnisse S₁ bis Sₙ zur Verfügung stellen, sodass mehrere, voneinander unabhängige Verschlüsselungsschlüssel K1₁ bis K1ₙ erzeugt werden können.

Als Ergebnis liegen die ersten Entschlüsselungsschlüssel VK dann in einer entschlüsselten Form (VK) und in einer verschlüsselten Form VKK vor, wobei gemäß dem Verfahren nach Fig. 3 mehrere verschlüsselte erste Entschlüsselungsschlüssel VKK₁ bis VKKₙ pro erstem Entschlüsselungsschlüssel VK vorliegen können. Die verschlüsselten ersten Entschlüsselungsschlüssel VKK (bzw. VKK₁ bis VKKₙ) werden dann in einem permanenten Speicher PMEM gespeichert, wie in Fig. 1 durch den Pfeil 1 verdeutlicht. Das Geheimnis S bzw. die Geheimnisse S₁ bis Sₙ werden nach dem Erzeugen der Verschlüsselungsschlüssel K₁ bzw. K1₁ bis K1ₙ gelöscht bzw. verworfen.

Das System bzw. die jeweilige auf die Datenbank DB zugreifende Einheit kann nun gemäß der ersten Verwendung die Daten aus der Datenbank DB lesen und unter Verwendung des ersten Entschlüsselungsschlüssels VK entschlüsseln.

Auf die in der Datenbank DB gespeicherten Daten soll nun gemäß der zweiten Verwendung zugegriffen werden. Die Instanzen U haben bisher allerdings erst der ersten Verwendung zugestimmt.

Um nun zu erreichen, dass die Instanzen U, oder zumindest einige der Instanzen U, der zweiten Verwendung explizit zustimmen, ist es nunmehr erfindungsgemäß vorgesehen, dass die in dem volatilen Speicher VMEM gespeicherten ersten Entschlüsselungsschlüssel VK gelöscht bzw. vernichtet werden. Dies kann dadurch erreicht werden, dass der volatile Speicher VMEM gelöscht wird, etwa indem die Energieversorgung des volatilen Speichers für einen bestimmten Zeitraum (z.B. 5 Sekunden) unterbrochen wird. Damit wird auch der Verschlüsselungsschlüssel K1 gelöscht. Zu diesem Zeitpunkt weist das System nun einen Zustand auf, bei dem die in der Datenbank DB gespeicherten Daten zwar ausgelesen aber nicht mehr entschlüsselt werden können. Denn die in entschlüsselter Form in dem volatilen Speicher VMEM gespeicherten ersten Entschlüsselungsschlüssel VK wurden ja gelöscht.

Sollten in den auf die Datenbank DB zugreifenden Einheiten erste Entschlüsselungsschlüssel VK gespeichert oder zwischengespeichert sein, werden auch diese ersten Entschlüsselungsschlüssel VK gelöscht bzw. vernichtet.

Beispielsweise kann es aus Gründen der Performance vorgesehen sein, dass ein der Zugriffskontrolleinrichtung PGU bereitgestellter erster Entschlüsselungsschlüssel VK in der Zugriffskontrolleinrichtung gespeichert wird, damit dieser Schlüssel nicht jedes mal neu von dem volatilen Speicher VMEM angefordert werden muss. In diesem Fall würde auch der in der Zugriffskontrolleinrichtung gespeicherte erste Entschlüsselungsschlüssel VK gelöscht bzw. vernichtet.

Erfindungsgemäß ist es nun vorgesehen, die verschlüsselten ersten Entschlüsselungsschlüssel VKK aus dem permanenten Speicher PMEM auszulesen und in den volatilen Speicher VMEM zu schreiben, wie in Fig. 1 mit dem Pfeil 2 gezeigt. Damit die verschlüsselten ersten Entschlüsselungsschlüssel VKK entschlüsselt werden können, muss die jeweilige Instanz U dem System das Geheimnis S erneut zur Verfügung stellen. Das erneute zur Verfügung stellen des Geheimnisses S kann als Einwilligung der jeweiligen Instanz U für die zweite Verwendung der Daten angesehen werden.

Aus dem erneut zur Verfügung gestellten Geheimnis S bzw. aus den Geheimnissen S₁ bis Sₙ wird in dem System dann ein zweiter Entschlüsselungsschlüssel K2 bzw. werden mehrere zweite Entschlüsselungsschlüssel K2₁ bis K2ₙ erzeugt, mit dem bzw. mit denen die verschlüsselten ersten Entschlüsselungsschlüssel VKK bzw. VKK₁ bis VKKₙ entschlüsselt werden.

Das Entschlüsseln der verschlüsselten ersten Entschlüsselungsschlüssel VKK erfolgt vorzugsweise in dem volatilen Speichern VMEM. Nach dem Entschlüsseln der verschlüsselten ersten Entschlüsselungsschlüssel VKK können die verschlüsselten ersten Entschlüsselungsschlüssel VKK in dem volatilen Speicher gelöscht werden, sodass in dem volatilen Speicher nur mehr die entschlüsselten ersten Entschlüsselungsschlüssel VK gespeichert sind. Die verschlüsselten ersten Entschlüsselungsschlüssel VKK sind nach wie vor in dem permanenten Speicher PMEM gespeichert.

Das System kann nun im Rahmen der zweiten Verwendung auf die in der Datenbank DB gespeicherten Daten zugreifen, jedenfalls insoweit, als die Instanzen U durch das erneute Zur Verfügung stellen des Geheimnisses S dieser zweiten Verwendung zugestimmt haben.

Für eine dritte und jede weitere Verwendung der Daten werden die zuvor genannten Schritte erneut durchgeführt, also im Wesentlichen:
- Löschen des volatilen Speichers VMEM
- Entgegennehmen eines Geheimnisses S von der Instanz U
- Erzeugen entsprechender zweiter Entschlüsselungsschlüssel K2 basierend auf dem Geheimnis S
- Entschlüsseln der verschlüsselten ersten Entschlüsselungsschlüssel VKK mit dem jeweiligen zweiten Entschlüsselungsschlüssel K2 und Speichern der entschlüsselten ersten Entschlüsselungsschlüssel VK in dem volatilen Speicher VMEM.

Damit kann das System im Rahmen genau einer einzigen konkreten Verwendung auf die Daten zugreifen, denn mit dem erneuten Bereitstellen des Geheimnisses S stimmt ein Benutzer genau einer konkreten Verwendung zu.

Um nun zu ermöglichen, dass ein Benutzer mehr als einer Verwendung zustimmen kann und so die Daten mit Zustimmung des Benutzers für unterschiedliche Zwecke ausgewertet werden können, sind die mehreren, voneinander unabhängigen Verschlüsselungsschlüssel K1₁ bis K1ₙ und die mehreren verschlüsselten ersten Entschlüsselungsschlüssel VKK₁ bis VKKₙ vorgesehen.

Mit den mehreren Geheimnissen S₁ bis Sₙ, die von dem Benutzer zur Verfügung stellen, werden die Verschlüsselungsschlüssel K1₁ bis K1ₙ erzeugt, mit denen der erste Entschlüsselungsschlüssel VK jeweils separat verschlüsselt werden. Ergebnis dieser Verschlüsselung sind dann die verschlüsselten ersten Entschlüsselungsschlüssel VKK₁ bis VKKₙ. Ferner werden mit den mehreren Geheimnissen S₁ bis Sₙ, die von dem Benutzer nach dem Löschen des volatilen Speichers VMEM dem System zur Verfügung gestellt werden, die mehrere zweiten Entschlüsselungsschlüssel K2₁ bis K2ₙ erzeugt, mit denen die jeweiligen verschlüsselten ersten Entschlüsselungsschlüssel VKK₁ bis VKKₙ entschlüsselt werden können. Hierbei ist jeder zweiten Entschlüsselungsschlüssel K2₁ bis K2ₙ für das Entschlüsseln genau eines verschlüsselten ersten Entschlüsselungsschlüssel VKK₁ bis VKKₙ vorgesehen.

Damit kann der Benutzer durch das Bereitstellen der Geheimnisse S₁ bis Sₙ entscheiden, welche verschlüsselten ersten Entschlüsselungsschlüssel VKK₁ bis VKKₙ von dem System entschlüsselt werden können. Weil jeder verschlüsselte erste Entschlüsselungsschlüssel VKK₁ bis VKKₙ für jeweils einen anderen Verwendungszweck (Zweck der Verwendung der Daten) vorgesehen ist, kann der Benutzer durch das Bereitstellen der Geheimnisse S₁ bis Sₙ festlegen, welchem Verwendungszweck die Daten zugänglich gemacht werden können.

Ferner weist das System eine Zugriffskontrolleinrichtung PGU (Policy Gate Unit) auf, über die der Zugriff auf die Daten in der Datenbank DB abgewickelt wird. Die Zugriffskontrolleinrichtung PGU legt aufgrund einer Anzahl von Zugriffsrichtlinien, die in der Zugriffskontrolleinrichtung PGU gespeichert sein können, fest, wer auf welche Art auf die Daten in der Datenbank DB zugreifen kann. Diese Zugriffsrichtlinien definieren also die Verwendung der Daten.

Ändern sich nun die Zugriffsrichtlinien, so entspricht dies einer Änderung der Verwendung der Daten.

Um nun zu erzwingen, dass die jeweiligen Instanzen U, oder zumindest einige der Instanzen U, diesen geänderten Zugriffrichtlinien und damit der sich geänderten Verwendung der Daten zustimmen, wir einerseits die Zugriffskontrolleinrichtung PGU nach einer Änderung der Zugriffrichtlinien neu gestartet. Andererseits ist die Zugriffskontrolleinrichtung PGU physikalisch, d.h. vorzugsweise fest verdrahtet, derart mit dem volatilen Speicher VMEM gekoppelt (Boot Coupling BC), dass ein Neustart der Zugriffskontrolleinrichtung PGU einen Neustart des volatilen Speichers VMEM bewirkt.

Der Neustart des volatilen Speichers VMEM kann etwa dadurch bewirkt werden, dass die Stromzufuhr des volatilen Speichers VMEM für eine gewisse Zeit unterbrochen wird. Der Inhalt des volatilen Speichers VMEM, und damit die ersten Entschlüsselungsschlüssel VK gehen dadurch verloren bzw. werden gelöscht. Etwaige Sicherungskopien des volatilen Speichers VMEM werden ebenfalls gelöscht. Nachdem Neustart des volatilen Speichers VMEM kann die Zustimmung der jeweiligen Instanz U zur weiteren Verwendung der Daten nur durch das Bereitstellen des jeweiligen Geheimnisses S erfolgen, wie vorstehend beschrieben.

Die Einheiten des in Fig. 1 gezeigten Systems können Bestandteil einer gesicherten Umgebung VI sein, die gewährleistet, dass weder der Betreiber des Systems noch ein sonstiger Dritter auf die Daten oder Schlüssel zugreifen kann. Ein Zugriff kann nur über besonders eingerichtete Schnittstellen erfolgen.

Die gesicherte Umgebung VI kann hierbei einen Netzwerkbereich, zumindest einen Verarbeitungsbereich und einen Speicherbereich umfassen, wobei der Netzwerkbereich, der Verarbeitungsbereich und der Speicherbereich physikalisch voneinander getrennt sind. Der Netzwerkbereich und der Verarbeitungsbereich sowie der Verarbeitungsbereich und der Speicherbereich können jeweils über ein internes Kommunikationsnetzwerk miteinander gekoppelt sein.

Die gesicherte Umgebung VI kann zudem eine Zugriffssteuerung aufweisen, die angepasst ist, einen Zugriff auf den Netzwerkbereich, den Verarbeitungsbereich und den Speicherbereich zu überwachen und zu steuern und einen Zugriff auf unverschlüsselte Daten zu verhindern. Die Zugriffssteuerung kann eine Zugriffssteuerungseinheit und eine Anzahl von mit der Zugriffssteuerungseinheit gekoppelte Sensor-/Aktor-Einheiten umfassen, wobei jedem Netzwerkbereich, Verarbeitungsbereich und Speicherbereich jeweils zumindest eine Sensor-/Aktor-Einheit zugeordnet ist, wobei jede Sensor-/Aktor-Einheit zumindest einen Sensor und/oder Aktor aufweist, und wobei die Zugriffssteuerungseinheit angepasst ist, die Sensor-/Aktor-Einheiten zu steuern. Der zumindest eine Sensor und/oder Aktor können ausgewählt sein aus der Gruppe zumindest umfassend Griffsteuerung, Powerswitch, Racksensor, Türsensor, und Kombinationen hiervon.

Der Netzwerkbereich kann angepasst sein, über ein Kommunikationsnetzwerk eine Kommunikation zwischen dem System VI und einem externen System (z.B. ein Client) abzuwickeln, wobei der Netzwerkbereich weiter angepasst sein kann, Daten in verschlüsselter Form zu senden und zu empfangen.

Vorteilhaft ist es, wenn der Verarbeitungsbereich angepasst ist, Daten von dem Speicherbereich und/oder von dem Netzwerkbereich zu empfangen, die empfangenen Daten zu verarbeiten und die verarbeiteten Daten an den Speicherbereich und/oder an den Netzwerkbereich zu übertragen. Die an den Netzwerkbereich zu übertragenden Daten können vorher verschlüsselt werden.

Damit ist es möglich, dass eine Big Data Analyse vollständig innerhalb der gesicherten Umgebung durchgeführt wird und nur die Ergebnisse der Analyse die gesicherte Umgebung verlassen müssen.

In dem erfindungsgemäßen System kann es vorgesehen sein, den volatilen Speicher VMEM redundant auszuführen. Hierzu werden eine oder mehrere redundante volatile Speicher VMEMr vorgesehen, die über eine gesicherte Netzwerkverbindung mit dem volatilen Speicher VMEM gekoppelt sind. Die redundanten volatilen Speicher VMEMr und der volatile Speicher VMEM können in derselben gesicherten Umgebung VI angeordnet sein. Alternativ können die redundanten volatilen Speicher VMEMr auch in einer weiteren gesicherten Umgebung VI angeordnet sein, wie in Fig. 1 gezeigt. In einer noch weiteren Alternative kann es vorgesehen, jeden der redundanten volatilen Speicher VMEMr in einer eigenen sicheren Umgebung anzuordnen.

Die redundanten volatilen Speicher VMEMr können verwendet werden, um beispielsweise nach einem Systemausfall den volatilen Speicher VMEM mit Hilfe der redundanten volatilen Speicher VMEMr wieder herstellen zu können.

Allerdings ist es vorgesehen, dass bei einem Neustart der Zugriffskontrolleinrichtung PGU nicht nur der volatile Speicher VMEM neu gestartet und die darin gespeicherten Schlüssel VK gelöscht werden, sondern auch alle redundanten volatilen Speicher VMEMr. Das heißt, dass auch alle in den redundanten volatilen Speicher VMEMr gespeicherten ersten Entschlüsselungsschlüssel VK gelöscht bzw. vernichtet werden.

**Fig. 2** zeigt ein Ablaufdiagramm für ein Beispiel eines erfindungsgemäßen Verfahrens zum gesicherten Zugriff auf Daten, wobei gemäß dem Verfahren nach Fig. 2 auf die Daten gemäß einer einzigen Zugriffsrichtlinie zugegriffen werden kann - für den Zugriff auf die Daten gemäß mehrerer Zugriffsrichtlinien wird auf das Beispiel gemäß Fig. 3 verwiesen.

Bei dem in Fig. 2 gezeigten Ablauf des erfindungsgemäßen Verfahrens wird davon ausgegangen, dass in der Datenbank DB bereits Daten verschlüsselt gespeichert sind und die entsprechenden ersten Entschlüsselungsschlüssel VK für jede Instanz U ausschließlich in dem volatilen Speicher VMEM gespeichert sind.

In einem ersten Schritt S1 stellt die Instanz U ein Geheimnis S bereit, das dem System zur Verfügung gestellt wird bzw. an das System übertragen wird.

In einem zweiten Schritt S2 erzeugt das System unter Verwendung des Geheimnisses S einen Verschlüsselungsschlüssel K1, der zum Verschlüsseln der ersten Entschlüsselungsschlüssel VK vorgesehen sind. das Geheimnis S kann anschließend gelöscht bzw. verworfen werden (Schritt S2.1).

Optional kann der Verschlüsselungsschlüssel K1 in dem volatilen Speicher VMEM gespeichert werden (Schritt S3).

In einem weiteren Schritt S4 werden die der jeweiligen Instanz zugeordneten ersten Entschlüsselungsschlüssel VK unter Verwendung des Verschlüsselungsschlüssel K1 verschlüsselt, sodass sich verschlüsselte erste Entschlüsselungsschlüssel VKK ergeben. An dieser Stelle sei erwähnt, dass jeder Instanz mehrere erste Entschlüsselungsschlüssel VK zugeordnet sein können. So können beispielsweise in regelmäßigen Abständen (z.B. stündlich, täglich oder wöchentlich) für jede Instanz U neue Schlüssel zum Verschlüsseln der Daten in der Datenbank DB und damit neue erste Entschlüsselungsschlüssel VK erzeugt werden.

Die verschlüsselten Entschlüsselungsschlüssel VK werden anschließend in dem Schritt S5 in einen permanenten Speicher PMEM gespeichert.

Die Schritte S4 und S5 werden für jeden in dem volatilen Speicher VMEM neu erzeugten ersten Entschlüsselungsschlüssel VK durchgeführt, vorzugsweise unmittelbar nach dem Erzeugen eines neuen ersten Entschlüsselungsschlüssels VK. Das hat zum Vorteil, dass zu jedem Zeitpunkt für jeden in dem volatilen Speicher VMEM gespeicherten ersten Entschlüsselungsschlüssel VK ein entsprechender verschlüsselter erster Entschlüsselungsschlüssel VKK in dem permanenten Speicher PMEM vorhanden ist. Der volatile Speicher VMEM kann so jederzeit gelöscht werden, ohne dass erste Entschlüsselungsschlüssel VK tatsächlich verloren gehen.

Besonders vorteilhaft ist es, wenn das Erzeugen eines ersten Entschlüsselungsschlüssels VK in dem volatilen Speicher VMEM und die Schritte S4 und S5 als atomare Aktion ausgeführt werden. Atomare Aktion bedeutet hier, dass der Vorgang des Erzeugens eines ersten Entschlüsselungsschlüssels VK bis zum Schritt S5 nicht unterbrochen werden darf, um Inkonsistenzen zwischen den ersten Entschlüsselungsschlüssel VK in dem volatilen Speicher VMEM und den verschlüsselten ersten Entschlüsselungsschlüssel VKK in dem permanenten Speicher PMEM zu vermeiden.

Hierzu kann es vorgesehen sein, den im Zusammenhang mit Fig. 1 beschriebenen Neustart des volatilen Speichers VMEM solange zu verzögern, bis nach dem Erzeugen eines ersten Entschlüsselungsschlüssels VK auch die dazugehörigen Schritte S4 und S5 abgeschlossen sind. Diese Verzögerung kann etwa dadurch realisiert werden, dass eine Steuereinheit oder ein Treiber des volatilen Speichers den Neustart des volatilen Speichers solange verhindert, bis die atomare(n) Aktion(en) abgeschlossen sind.

Beim Erzeugen eines ersten Entschlüsselungsschlüssels VK kann in dem volatilen Speicher oder in einem Register der Steuereinheit ein entsprechendes Flag gesetzt werden, das erst von dem Schritt S5 wieder zurückgesetzt werden kann. Erst wenn alle Flags zurückgesetzt sind, kann der volatile Speicher VMEM neu gestartet werden. Alternativ zu den Flags kann auch ein Zähler vorgesehen sein, der beim Erzeugen eines ersten Entschlüsselungsschlüssels VK hochgezählt und vom dem Schritt S5 wieder heruntergezählt wird, sodass der volatile Speicher VMEM erst dann neu gestartet werden kann, wenn der Zähler den Wert Null bzw. seinen Urzustand aufweist. Um einen Deadlock oder eine Endlosschleife zu vermeiden, können nach dem angeforderten Neustart des volatilen Speichers VMEM keine neuen ersten Entschlüsselungsschlüssel VK mehr erzeugt werden - es können nur noch die atomaren Aktionen abgeschlossen werden.

In dem Schritt A wird die mit Bezug auf Fig. 1 beschriebene Zugriffsrichtlinie geändert, was unmittelbar zu einem Neustart der Zugriffskontrolleinrichtung PGU und damit auch zu einem Neustart des volatilen Speichers VMEM führt, wobei der volatile Speicher VMEM vorzugsweise so ausgestaltet ist, dass zuerst alle atomaren Aktionen beendet werden, bevor der volatile Speicher VMEM neu gestartet und damit alle in dem volatilen Speicher gespeicherten ersten Entschlüsselungsschlüssel VK gelöscht werden.

Der Neustart des volatilen Speichers bewirkt, dass in dem Schritt S6 der volatile Speicher VMEM gelöscht wird.

Im Anschluss an den Neustart des volatilen Speichers wird die Instanz U in dem Schritt S7 aufgefordert, dem Betreiber des Systems die Einwilligung für eine neue / weiterer Verwendung der Daten zu erteilen. Das Erteilen der Einwilligung erfolgt dadurch, dass die Instanz U in dem Schritt S8 dem System erneut das Geheimnis S mitteilt.

Nach der erneuten Mitteilung / Übermittlung des Geheimnisses S durch die Instanz U werden die der Instanz U zugeordneten verschlüsselten ersten Entschlüsselungsschlüssel VKK in dem Schritt S9 von dem permanenten Speicher PMEM in den volatilen Speicher VMEM kopiert.

Anschließend wird in dem Schritt S10 basierend auf dem erneut übermittelten Geheimnis S ein zweiter Entschlüsselungsschlüssel K2 erzeugt, mit dem im Schritt S11 die in den volatilen Speicher VMEM kopierten verschlüsselten ersten Entschlüsselungsschlüssel VKK entschlüsselt werden. Die der Instanz U zugeordneten ersten Entschlüsselungsschlüssel liegen dann in dem volatilen Speichern VMEM wieder in entschlüsselter Form vor (VK) und können für das Entschlüsseln der der Instanz U zugeordneten und in der der Daten DB gespeicherten Daten verwendet werden, und zwar für die weitere Verwendung.

Damit wird es ermöglicht, dass einerseits ein Nutzer der neuen / weiteren Verwendung der Daten zustimmen muss und andererseits auch die bereits vorhanden Daten der neuen / weiteren Verwendung zugänglich sind. Ferner kann dadurch auch verhindert werden, dass die Daten einem potentiellen Missbrauch durch eine geänderte Zugriffsrichtlinie ausgesetzt werden, da bei einer Änderung der Zugriffsrichtlinie die ersten Entschlüsselungsschlüssel VK in dem volatilen Speicher VMEM automatisch gelöscht werden und das Wiederherstellen dieser Schlüssel nur mit Zustimmung der jeweiligen Instanz erfolgen kann.

Anstelle einer Änderung einer Richtlinie kann das Löschen des volatilen Speichers VMEM auch aufgrund eines Angriffes auf das System angestoßen werden. Die ersten Entschlüsselungsschlüssel VK sind auch in diesem Fall nur mit Zustimmung der jeweiligen Instanz wieder herstellbar (durch erneutes Übermitteln des Geheimnisses S).

**Fig. 3** zeigt ein Ablaufdiagramm eines erfindungsgemäßen Verfahrens, bei dem der sichere Zugriff auf die Daten gemäß mehrerer unterschiedlicher Zugriffsrichtlinien ermöglicht wird.

Die einzelnen Verfahrensschritte entsprechen hierbei im Wesentlichen den Verfahrensschritten in Fig. 2. Sie unterscheiden sich jedoch darin, dass jeweils mehrere (verschiedene) Geheimnisse S₁ bis Sₙ für das Erzeugen mehrerer Verschlüsselungsschlüssel K₁ bis Kₙ und für das Erzeugen mehrerer zweiter Entschlüsselungsschlüssel K2₁ bis K2ₙ vorgesehen sind bzw. von einem Benutzer U dem System zur Verfügung gestellt werden. Zudem werden nach dem Verfahren gemäß Fig. 3 mit Hilfe der mehreren Verschlüsselungsschlüssel K₁ bis Kₙ mehrere verschlüsselte erste Entschlüsselungsschlüssel VKK₁ bis VKKₙ erzeugt. Sofern nach dem Löschen des volatilen Speichers VMEM die entsprechenden Geheimisse von dem Benutzer U erneut bereitgestellt werden, kann das System die zweiten Entschlüsselungsschlüssel K2₁ bis K2ₙ erzeugen und mit ihrer Hilfe die jeweiligen verschlüsselten ersten Entschlüsselungsschlüssel VKK₁ bis VKKₙ entschlüsseln.

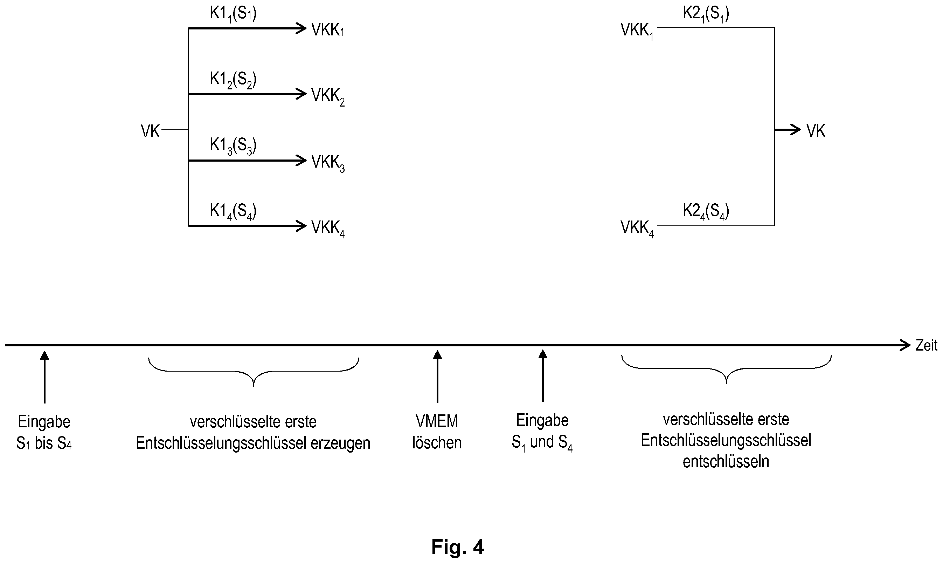

Wenn jeder verschlüsselte erste Entschlüsselungsschlüssel VKK₁ bis VKKₙ einer anderen Zugriffsrichtlinie zugeordnet ist, kann der Benutzer durch Bereitstellen der Geheimnisse S₁ bis Sₙ kontrollieren, welche verschlüsselten ersten Entschlüsselungsschlüssel VKK₁ bis VKKₙ für den Zugriff auf die Daten entschlüsselt werden können. Ein Beispiel hierfür ist in Fig. 4 gezeigt.

Bei dem erstmaligen Bereitstellen der Geheimnisse kann der Benutzer U gemäß dem Verfahren nach Fig. 3 einen kleinen Vorrat an Geheimnissen S₁ bis Sₙ (z.B. mit n=10 oder n=20) dem System zur Verfügung stellen. Mit jedem dieser Geheimnisse kann das System dann den diesem Benutzer zugeordneten ersten Entschlüsselungsschlüssel VK verschlüsseln, sodass n verschlüsselte erste Entschlüsselungsschlüssel VKK erzeugt werden (VKK₁ bis VKKₙ). Damit kann also ein Vorrat an verschlüsselten ersten Entschlüsselungsschlüssel VKK erzeugt werden, die beispielsweise für zukünftige Zugriffsrichtlinie zur Verfügung stehen.

Nach einem Löschen des volatilen Speichers VMEM, in die ersten Entschlüsselungsschlüssel VK ausschließlich gespeichert sind, muss der Benutzer dann dem System ermöglichen, die in dem permanenten Speicher PMEM gespeicherten verschlüsselten ersten Entschlüsselungsschlüssel VKK₁ bis VKKₙ zu entschlüsseln, damit das System mit dem jeweiligen entschlüsselten ersten Entschlüsselungsschlüssel (=VK) auf die Daten zugreifen kann. Hierzu muss der Benutzer U die Geheimnisse S₁ bis Sₙ erneut dem System zur Verfügung stellen. Stellt der Benutzer nur eine Teilmenge der Geheimnisse (z.B. S₁ bis Sₙ₋₁) dem System zur Verfügung kann das System auch nur für die entsprechenden Teilmenge der verschlüsselten ersten Entschlüsselungsschlüssel (z.B. VKK₁ bis VKKₙ₋₁) den entsprechenden ersten Entschlüsselungsschlüssel VK wieder herstellen bzw. für einen Zugriff auf die Daten verwenden.

**Fig. 4** zeigt einen zeitlichen Ablauf für ein konkretes Beispiel des erfindungsgemäßen Verfahrens.

Zunächst erfolgt die Eingabe von vier Geheimnissen S₁ bis S₄, mit denen der Benutzer U vier verschiedenen Zugriffsrichtlinien (ZR₁ bis ZR₄) zustimmen kann, d.h. dem System die Einwilligung erteilt, gemäß dieser vier Zugriffsrichtlinien auf die Daten zuzugreifen.

Unter Verwendung dieser vier Geheimnisse S₁ bis S₄ werden dann aus dem ersten Entschlüsselungsschlüssel VK vier verschlüsselte erste Entschlüsselungsschlüssel VKK₁ bis VKK₄ erzeugt, indem mit jedem Geheimnis zunächst ein Verschlüsselungsschlüssel K1₁ bis K1₄ erzeugt wird und mit diesen Verschlüsselungsschlüsseln K1₁ bis K1₄ dann separat der erste Entschlüsselungsschlüssel VK verschlüsselt wird (K1₁(S₁) bis K1₄(S₄)).

Die vier verschlüsselten ersten Entschlüsselungsschlüssel VKK₁ bis VKK₄ werden dann im permanenten Speicher PMEM gespeichert.

Das System kann nun gemäß der vier Zugriffsrichtlinien mit Hilfe des ersten Entschlüsselungsschlüssels VK auf die Daten zugreifen.

Jeder Zugriffsrichtlinie kann der erste Entschlüsselungsschlüssel VK zugeordnet sein. Beispielsweise kann in jeder Zugriffsrichtlinie ein Verweis auf den ersten Entschlüsselungsschlüssel VK gespeichert sein. Alternativ kann in jeder Zugriffsrichtlinie der erste Entschlüsselungsschlüssel VK direkt gespeichert sein.

In einer vorteilhaften Ausgestaltung der Erfindung kann es jedoch vorgesehen sein, dass der erste Entschlüsselungsschlüssel VK dem Benutzer U zugeordnet ist und dem Benutzer U wiederum 1 bis n Zugriffrichtlinien (ZR₁ bis ZRₙ) zugeordnet sind:

VK ↔ U ↔ ZR₁ bis ZRₙ

Die Zuordnung VK ↔ U kann etwa dadurch realisiert werden, dass in den Metadaten des ersten Entschlüsselungsschlüssels VK eine Referenz auf den Benutzer U gespeichert ist. Die Metadaten des ersten Entschlüsselungsschlüssels VK sind wie der erste Entschlüsselungsschlüssel VK auch ausschließlich in dem volatilen Speicher VMEM gespeichert. Beim Verschlüsseln des ersten Entschlüsselungsschlüssels VK können diese Metadaten mit verschlüsselt werden und zusammen mit dem verschlüsselten ersten Entschlüsselungsschlüssel VKK (als verschlüsselter Block, der die Metadaten und den ersten Entschlüsselungsschlüssel VK enthält) in dem permanenten Speicher PMEM gespeichert werden. Auf diese Weise ist gewährleistet, dass auch die Zuordnung VK ↔ U beim Löschen des volatilen Speichers gelöscht wird, da die Zuordnung VK ↔ U ausschließlich im volatilen Speicher VMEM gespeichert ist.

Zu Zuordnung U ↔ ZR₁ bis ZRₙ (zwischen U und ZR ist eine 1 :n-Relation definiert) wird ebenfalls ausschließlich im volatilen Speicher VMEM gespeichert, sodass auch diese Zuordnung beim Löschen des volatilen Speichers gelöscht wird. Der jeweilige verschlüsselte Block, der die Metadaten und den ersten Entschlüsselungsschlüssel VK enthält, enthält auch die Zuordnung zu der jeweiligen Zugriffrichtlinie. Die Zuordnung zu der jeweiligen Zugriffrichtlinie kann hierbei Bestandteil der Metadaten sein.

Die vorstehend beschriebene Zuordnung VK ↔ U ↔ ZR₁ bis ZRₙ hat folgende Vorteile:
- der erste Entschlüsselungsschlüssel VK muss nur einmal im volatilen Speicher gespeichert werden und zwar unabhängig davon, für wie viele Zugriffsrichtlinien der erste Entschlüsselungsschlüssel VK verwendet werden soll,
- die Zuordnung VK ↔ U muss ebenfalls nur einmal im volatilen Speicher gespeichert werden,
- beim Wiederherstellen des ersten Entschlüsselungsschlüssels VK (aus den verschlüsselter Blöcken, die die Metadaten, den ersten Entschlüsselungsschlüssel VK und die Zuordnung zu der jeweiligen Zugriffrichtlinie enthalten) muss der erste Entschlüsselungsschlüssel VK nur einmal im volatilen Speicher erzeugt werden, nämlich dann, wenn der erste verschlüsselte Block entschlüsselt wird,
- beim Entschlüsseln der verschlüsselten Blöcke muss im volatilen Speicher VMEM nur mehr die Zugriffrichtlinie dem jeweiligen Benutzer U zugeordnet werden,
- durch das Speichern der Zuordnung U ↔ ZR in dem verschlüsselt Block ist gewährleistet, dass nach dem Entschlüsseln des Blockes die korrekte Zugriffsrichtlinie dem Benutzer U zugeordnet wird,
- da nur der Benutzer U weiß, welches Geheimnis welcher Zugriffsrichtlinie zugeordnet ist bzw. mit welchem Geheimnis welcher verschlüsselte Block (der auch die Informationen zu der Zugriffrichtlinie enthält) entschlüsselt werden kann, kann der Betreiber des Systems nach einem Löschen des volatilen Speichers VMEM anhand der verschlüsselten Blöcke nicht ermitteln, welchen Zugriffrichtlinien der Benutzer U ursprünglich zugestimmt hat. Der Betreiber weiß lediglich welche verschlüsselten Blöcke welchem Benutzer zugeordnet sind.

Der volatile Speicher VMEM, in dem der erste Entschlüsselungsschlüssel VK (und je nach konkreter Ausgestaltung der Erfindung auch die Zuordnungen VK ↔ U und U ↔ ZR₁ bis ZRₙ) gespeichert sind, wird anschließend gelöscht.

Um dem System den erneuten Zugriff auf die in der Datenbank DB verschlüsselt gespeicherten Daten zu ermöglichen, muss der Benutzer U die entsprechenden Geheimnisse dem System erneut zur Verfügung stellen.

Gemäß dem Beispiel in Fig. 4 stellt der Benutzer U dem System die Geheimnisse S₁ und S₄ erneut zur Verfügung, was gleichbedeutend damit ist, dass das System nur gemäß den Zugriffrichtlinien ZR₁ und ZR₄ auf die Daten zugreifen kann.

Mit Hilfe der erneut eingegebenen Geheimnisse S₁ und S₄ erzeugt das System zwei Entschlüsselungsschlüssel K2₁ und K2₄. Mit den beiden Entschlüsselungsschlüsseln K2₁ und K2₄ werden sodann die beiden verschlüsselten ersten Entschlüsselungsschlüssel VKK₁ und VKK₄ (bzw. die verschlüsselten Blöcke, die die ersten Entschlüsselungsschlüssel VKK₁ und VKK₄ enthalten) entschlüsselt. Der so wiederhergestellte erste Entschlüsselungsschlüssel VK kann nun von dem System verwendet werden um gemäß der beiden Zugriffrichtlinien ZR₁ und ZR₄ auf die Daten zuzugreifen.

Bei Vorsehen der vorstehend beschriebenen Zuordnungen VK ↔ U ↔ ZR₁ bis ZRₙ wird beim Entschlüsseln des ersten verschlüsselten Blockes der erste Entschlüsselungsschlüssel VK in dem volatilen Speicher gespeichert und dem Benutzer U zugeordnet. Gleichzeitig wird die in dem verschlüsselten Block angegebene Zugriffrichtlinie dem Benutzer U zugeordnet, wobei diese Zuordnung vorzugsweise in dem volatilen Speicher gespeichert wird.

Beim Entschlüsseln des zweiten verschlüsselten Blockes (und ggf. der weiteren verschlüsselten Blöcke) muss nur mehr die in dem jeweiligen verschlüsselten Block angegebene Zugriffrichtlinie dem Benutzer U zugeordnet werden.

Bei dem in Fig. 4 gezeigten Beispiel kann das System nach dem Löschen des volatilen Speichers die verschlüsselten ersten Entschlüsselungsschlüssel VKK₂ und VKK₃ (bzw. die entsprechenden verschlüsselten Blöcke) nicht entschlüsseln, da dem System die entsprechenden Geheimnisse S₂ und S₃ nicht bekannt sind.

### Bezugszeichenliste:

- BC: Boot Coupling (physikalische Kopplung zwischen dem volatilen Speicher VMEM und der Zugriffskontrolleinrichtung PGU)
- DB: Datenbank, in der die Daten (verschlüsselt) gespeichert sind
- K1, K1₁ - K1ₙ: Verschlüsselungsschlüssel zum Verschlüsseln der ersten Entschlüsselungsschlüssel VK
- K2, K2₁ - K2ₙ: zweiter Entschlüsselungsschlüssel zum Entschlüsseln der verschlüsselten ersten Entschlüsselungsschlüssel VKK
- PGU: Zugriffskontrolleinrichtung (Policy Gate Unit)
- PMEM: permanenter Speicher
- S, S₁ - Sₙ: Geheimnis, z.B. Passwort, Token, etc.
- S1 - S11: Schritte des erfindungsgemäßen Verfahrens
- U: Instanz, der die Daten gehören, etwa ein User
- VI: gesicherte Umgebung
- VK: erster Entschlüsselungsschlüssel zum Entschlüsseln der Daten
- VKK, VKK₁ - VKKₙ: verschlüsselte erste Entschlüsselungsschlüssel VK
- VMEM: volatiler Speicher
- VMEMr: redundanter volatiler Speicher VMEM

## Patentansprüche

1. Verfahren zum gesicherten Zugriff auf Daten, wobei
- die Daten eine Anzahl von Datensätzen umfassen, wobei
- die Datensätze jeweils einer Instanz (U), vorzugweise einem Benutzer zugeordnet werden, und
- die Datensätze verschlüsselt in einer Datenbank (DB) gespeichert werden, wobei zum Entschlüsseln der der jeweiligen Instanz zugeordneten Datensätze ein der jeweiligen Instanz (U) zugeordneter erster Entschlüsselungsschlüssel (VK) verwendet wird,
- die ersten Entschlüsselungsschlüssel (VK) in einem volatilen Speicher (VMEM) gespeichert werden,
- die der jeweiligen Instanz (U) zugeordneten ersten Entschlüsselungsschlüssel (VK) jeweils separat mit einem ersten und mit zumindest einem zweiten der jeweiligen Instanz (U) zugeordneten Verschlüsselungsschlüssel (K1) verschlüsselt werden (S4) und die sich daraus ergebenden zumindest zwei verschlüsselten ersten Entschlüsselungsschlüssel (VKK) in einem permanenten Speicher (PMEM) gespeichert werden (S5),
- der Zugriff auf die in der Datenbank (DB) verschlüsselten Datensätze über eine Zugriffskontrolleinrichtung (PGU) abgewickelt wird, wobei in der Zugriffskontrolleinrichtung (PGU) Zugriffsrichtlinien hinterlegt sind, die angeben, wer zu welchem Zweck auf die verschlüsselten Datensätze zugreifen kann,
- der jeweiligen Instanz (U) eine Anzahl an Zugriffsrichtlinien zugeordnet ist,
- jeder der zumindest zwei verschlüsselten ersten Entschlüsselungsschlüssel (VKK) einer anderen Zugriffsrichtlinie zugeordnet ist,
- bei einer Änderung der Zugriffsrichtlinien der gesamte Inhalt des volatilen Speichers (VMEM) gelöscht wird, und
- nach einem Löschen (S6) des volatilen Speichers (VMEM)
- die verschlüsselten ersten Entschlüsselungsschlüssel (VKK) von dem permanenten Speicher (PMEM) in den volatilen Speicher (VMEM) kopiert werden (S9), und
- in dem volatilen Speicher (VMEM) die verschlüsselten ersten Entschlüsselungsschlüssel (VKK) mit einem ersten und mit zumindest einem zweiten der jeweiligen Instanz (U) zugeordneten zweiten Entschlüsselungsschlüssel (K2) entschlüsselt werden, sodass der der jeweiligen Instanz (U) zugeordnete erste Entschlüsselungsschlüssel (VK) in dem volatilen Speicher (VMEM) wieder in entschlüsselter Form vorliegt, und für das Entschlüsseln der der jeweiligen Instanz (U) zugeordneten und in der Datenbank (DB) gespeicherten Daten verwendet werden kann.

2. Verfahren nach dem vorhergehenden Anspruch, wobei die der jeweiligen Instanz (U) zugeordneten Verschlüsselungsschlüssel (K1) und die der jeweiligen Instanz (U) zugeordneten zweiten Entschlüsselungsschlüssel (K2) jeweils mit einem Geheimnis (S) erzeugt werden, das von der jeweiligen Instanz (U) bereitgestellt wird, wobei das Geheimnis (S) von der jeweiligen Instanz (U) separat für das Erzeugen der Verschlüsselungsschlüssel (K1) (S1) und für das Erzeugen der zweiten Entschlüsselungsschlüssel (K2) (S8) bereitgestellt wird, wobei von der Instanz (U) für jeden Verschlüsselungsschlüssel (K1) und für jeden zweiten Entschlüsselungsschlüssel (K2) ein verschiedenes Geheimnis (S) bereitgestellt wird.

3. Verfahren nach dem vorhergehenden Anspruch, wobei die Geheimnisse (S) jeweils nach dem Erzeugen (S2) der Verschlüsselungsschlüssel (K1) und nach dem Erzeugen (S10) der zweiten Entschlüsselungsschlüssel (K2) verworfen bzw. gelöscht werden (S2.1; S10.1).

4. Verfahren nach einem der vorhergehenden Ansprüche, wobei die jeweiligen Verschlüsselungsschlüssel (K1) nach dem Verschlüsseln (S4) der ersten Entschlüsselungsschlüssel (VK) gelöscht oder ausschließlich in dem volatilen Speicher (VMEM) gespeichert werden.

5. Verfahren nach einem der vorhergehenden Ansprüche, wobei die jeweiligen zweiten Entschlüsselungsschlüssel (K2) nach dem Entschlüsseln (S11) der verschlüsselten ersten Entschlüsselungsschlüssel (VKK) gelöscht oder ausschließlich in dem volatilen Speicher (VMEM) gespeichert werden.

6. Verfahren nach dem vorhergehenden Anspruch, wobei die Zugriffskontrolleinrichtung (PGU) physikalisch mit dem volatilen Speicher (VMEM) gekoppelt ist, wobei bei einer Änderung der Zugriffsrichtlinien die Zugriffskontrolleinrichtung (PGU) neu gestartet wird und aufgrund der physikalischen Kopplung auch der volatile Speicher (VMEM) neu gestartet wird und die in dem volatilen Speicher (VMEM) gespeicherten ersten Entschlüsselungsschlüssel (VK) gelöscht werden.

7. Verfahren nach einem der vorhergehenden Ansprüche, wobei beim Verschlüsseln des ersten Entschlüsselungsschlüssels (VK) ein verschlüsselter Block (Datenblock) erzeugt wird, wobei der verschlüsselte Block
- den ersten Entschlüsselungsschlüssel (VK), und
- Metadaten des ersten Entschlüsselungsschlüssels (VK) umfasst, wobei die Metadaten des ersten Entschlüsselungsschlüssels
- eine Information über eine Zuordnung des ersten Entschlüsselungsschlüssels (VK) zu einer Instanz (U), und/oder
- ein Information über eine Zuordnung einer Anzahl von Zugriffsrichtlinien zu einer Instanz (U)
umfassen.

8. System zum gesicherten Zugriff auf Daten, wobei das System zumindest
- einen volatilen Speicher (VMEM) zum Speichern von ersten Entschlüsselungsschlüsseln (VK),
- einen permanenten Speicher (PMEM) zum Speichern von verschlüsselten ersten Entschlüsselungsschlüsseln (VKK),
- eine Datenbank (DB), zum Speichern von verschlüsselten und mit den ersten Entschlüsselungsschlüsseln (VK) entschlüsselbarer Daten, und
- einer Zugriffskontrolleinrichtung (PGU), die angepasst ist, den Zugriff auf die Daten in der Datenbank (DB) zu überwachen und/oder zu regeln und/oder zu steuern, wobei der Zugriffskontrolleinrichtung zumindest eine Zugriffsrichtlinie zugeordnet ist, und wobei die Zugriffskontrolleinrichtung weiter angepasst ist, den volatilen Speicher (VMEM) zu löschen, sobald sich die zumindest eine Zugriffsrichtlinie ändert, umfasst, und wobei das System angepasst ist, das Verfahren nach einem der vorhergehenden Ansprüche auszuführen.

## Claims

1. Method for accessing data in a secure manner, wherein
- the data comprise a number of data sets, wherein
- each of the data sets is assigned to an entity (U), preferably a user, and
- the data sets are stored in encrypted form in a database (DB), wherein a first decryption key (VK) assigned to a particular entity (U) is used to decrypt the data sets assigned to the particular entity,
- the first decryption keys (VK) are stored in a volatile memory (VMEM),
- each of the first decryption keys (VK) assigned to the particular entity (U) is encrypted (S4) by a first and at least a second encryption key (K1) assigned to the particular entity (U), and the at least two encrypted first decryption keys (VKK) resulting therefrom are stored (S5) in a permanent memory unit (PMEM),
- the access to the data sets stored in encrypted form in the database (DB) is handled by an access control device (PGU), wherein access policies indicating who can access the encrypted data sets and for what purpose are stored in the access control device (PGU),
- each entity (U) is assigned a number of access policies,
- each of the at least two encrypted first decryption keys (VKK) is assigned a different access policy,
- all content in the volatile memory (VMEM) is deleted if the access policies are changed, and
- after the volatile memory (VMEM) is erased (S6)
- the encrypted first decryption keys (VKK) are copied (S9) from the permanent memory (PMEM) into the volatile memory (VMEM), and
- in the volatile memory (VMEM) the encrypted first decryption keys (VKK) are decrypted by a first and at least a second second decryption key (K2) assigned to the particular entity (U), so that the first decryption key (VK) assigned to the particular entity (U) is again present in decrypted form in the volatile memory (VMEM) and can be used to decrypt the data assigned to the particular entity (U) and stored in the database (DB).

2. Method according to the preceding claim, wherein each of the encryption keys (K1) assigned to the particular entity (U) and the second decryption keys (K2) assigned to the particular entity (U) are generated using a secret (S) provided by the particular entity (U), wherein the secret (S) is provided by the particular entity (U) separately for generating the encryption keys (K1) (S1) and for generating the second decryption keys (K2) (S8), wherein the entity (U) provides a different secret (S) for each encryption key (K1) and for each second decryption key (K2).

3. Method according to the preceding claim, wherein each secret (S) is discarded or deleted (S2.1; S10.1) after the generation (S2) of the encryption keys (K1) and after the generation (S10) of the second decryption keys (K2).

4. Method according to any of the preceding claims, wherein each of the encryption keys (K1) is erased or stored only in the volatile memory (VMEM) after the encryption (S4) of the first decryption keys (VK).

5. Method according to any of the preceding claims, wherein each of the second decryption keys (K2) is erased or stored only in the volatile memory (VMEM) after the decryption (S11) of the encrypted first decryption keys (VKK).

6. Method according to the preceding claim, wherein the access control device (PGU) is physically coupled to the volatile memory (VMEM), wherein, in the event of a change to the access policies, the access control device (PGU) is restarted and the volatile memory (VMEM) is also restarted on account of the physical coupling, and the first decryption keys (VK) stored in the volatile memory (VMEM) are erased.

7. Method according to any of the preceding claims, wherein an encrypted block (data block) is generated when the first decryption key (VK) is encrypted, wherein the encrypted block comprises
- the first decryption key (VK), and
- metadata of the first decryption key (VK),
wherein the metadata of the first decryption key comprise
- information regarding an assignment of the first decryption key (VK) to an entity (U), and/or
- information regarding an assignment of a number of access policies to an entity (U).

8. System for accessing data in a secure manner, wherein the system comprises at least
- a volatile memory (VMEM) for storing first decryption keys (VK),
- a permanent memory (PMEM) for storing encrypted first decryption keys (VKK),
- a database (DB) for storing encrypted data that can be decrypted by the first decryption key (VK), and
- an access control device (PGU) which is adapted to monitor and/or regulate and/or control access to the data in the database (DB), wherein at least one access policy is assigned to the access control device, and wherein the access control device is further adapted to erase the volatile memory (VMEM) as soon as the at least one access policy is changed,
and wherein the system is adapted to carry out the method according to any of the preceding claims.

## Revendications

1. Procédé d'accès sécurisé à des données, dans lequel
- les données comprennent un certain nombre d'ensembles de données,
- les ensembles de données étant respectivement associés à une instance (U), de préférence à un utilisateur, et
- les ensembles de données étant stockés de façon codée dans une banque de données (DB), une première clé de décodage (VK) associée à l'instance (U) respective étant utilisée pour décoder les ensembles de données associés à l'instance respective,
- les premières clés de décodage (VK) étant stockées dans une mémoire volatile (VMEM),
- les premières clés de décodage (VK) associées à l'instance (U) respective étant codées (S4) respectivement séparément avec une première et avec au moins une seconde clés de codage (K1) associées à l'instance (U) respective et les au moins deux premières clés de décodage (VKK) codées résultantes étant stockées (S5) dans une mémoire permanente (PMEM),
- l'accès aux ensembles de données codés dans la banque de données (DB) étant géré par l'intermédiaire d'un dispositif de commande d'accès (PGU), des directives d'accès étant consignées dans le dispositif de commande d'accès (PGU), lesquelles indiquent qui peut accéder aux ensembles de données codés et dans quel but,
- un certain nombre de directives d'accès étant associé à l'instance (U) respective,
- chacune des au moins deux premières clés de décodage (VKK) codées étant associée à une directive d'accès différente,
- le contenu entier de la mémoire volatile (VMEM) étant supprimé lorsque les directives d'accès sont modifiées, et
- après une suppression (S6) de la mémoire volatile (VMEM)
- les premières clés de décodage (VKK) codées étant copiées (S9) depuis la mémoire permanente (PMEM) vers la mémoire volatile (VMEM), et
- les premières clés de décodage (VKK) codées étant décodées avec une première et avec au moins une seconde clés de décodage (K2) associées à l'instance (U) respective dans la mémoire volatile (VMEM), de sorte que la première clé de décodage (VK) associée à l'instance (U) respective est à nouveau présente sous forme décodée dans la mémoire volatile (VMEM) et peut être utilisée pour décoder les données associées à l'instance (U) respective et stockées dans la banque de données (DB).

2. Procédé selon la revendication précédente, dans lequel les clés de codage (K1) associées à l'instance (U) respective et les secondes clés de décodage (K2) associées à l'instance (U) respective sont générées respectivement avec un secret (S) qui est fourni par l'instance (U) respective, le secret (S) étant fourni par l'instance (U) respective séparément pour la génération (S1) des clés de codage (K1) et pour la génération (S8) des secondes clés de décodage (K2), un secret (S) différent étant fourni par l'instance (U) pour chaque clé de codage (K1) et pour chaque seconde clé de décodage (K2).

3. Procédé selon la revendication précédente, dans lequel les secrets (S) sont rejetés ou supprimés (S2.1; S10.1) respectivement après la génération (S2) de la clé de codage (K1) et après la génération (S10) de la seconde clé de décodage (K2).

4. Procédé selon l'une des revendications précédentes, dans lequel les clés de codage (K1) respectives sont supprimées après le codage (S4) de la première clé de décodage (VK) ou sont stockées exclusivement dans la mémoire volatile (VMEM).

5. Procédé selon l'une des revendications précédentes, dans lequel les secondes clés de décodage (K2) respectives sont supprimées après le décodage (S11) de la première clé de décodage (VKK) codée ou sont stockées exclusivement dans la mémoire volatile (VMEM).

6. Procédé selon l'une des revendications précédentes, dans lequel le dispositif de commande d'accès (PGU) est accouplé physiquement à la mémoire volatile (VMEM), le dispositif de commande d'accès (PGU) étant redémarré lorsque les directives d'accès sont modifiées et, en raison de l'accouplement physique, la mémoire volatile (VMEM) étant également redémarrée et les premières clés de décodage (VK) stockées dans la mémoire volatile (VMEM) étant supprimées.

7. Procédé selon l'une des revendications précédentes, dans lequel un bloc codé (bloc de données) est généré lors du codage de la première clé de décodage (VK), le bloc codé comprenant
- la première clé de décodage (VK), et
- des métadonnées de la première clé de décodage (VK)
les métadonnées de la première clé de décodage comprenant
- des informations concernant une association de la première clé de décodage (VK) à une instance (U), et/ou
- des informations concernant une association d'un certain nombre de directives d'accès à une instance (U).

8. Système d'accès sécurisé à des données, dans lequel le système comprend au moins
- une mémoire volatile (VMEM) permettant le stockage de premières clés de décodage (VK),
- une mémoire permanente (PMEM) permettant le stockage de premières clés de décodage (VKK) codées,
- une banque de données (DB) permettant le stockage de données codées qui peuvent être décodées avec les premières clés de décodage (VK), et
- un dispositif de commande d'accès (PGU) qui est adapté pour surveiller et/ou réguler et/ou commander l'accès aux données dans la banque de données (DB), au moins une directive d'accès étant associée au dispositif de commande d'accès, et le dispositif de commande d'accès étant en outre adapté pour supprimer la mémoire volatile (VMEM) dès que l'au moins une directive d'accès est modifiée,
et le système étant adapté pour exécuter le procédé selon l'une des revendications précédentes.
